Europäisches Patentamt

European Patent Office

Office européen des brevets

(19)

(11) **EP 0 703 528 B1**

(12) **FASCICULE DE BREVET EUROPEEN**

(45) Date de publication et mention
de la délivrance du brevet:
**06.08.1997 Bulletin 1997/32**

(51) Int Cl.⁶: **G06F 7/72**, G06F 7/544

(21) Numéro de dépôt: **95460035.9**

(22) Date de dépôt: **19.09.1995**

(54) **Circuit électronique de calcul modulaire dans un corps fini**

Elektronische Schaltung zur Modularberechnung in einem endlichen Körper

Electronic circuit for modulo computation in a finite field

(84) Etats contractants désignés:
**DE FR GB IT**

(30) Priorité: **21.09.1994 FR 9411420**

(43) Date de publication de la demande:
**27.03.1996 Bulletin 1996/13**

(73) Titulaire: **SGS-THOMSON MICROELECTRONICS S.A.**
**94250 Gentilly (FR)**

(72) Inventeur: **Monier, Guy, Cabinet Ballot-Schmit**
**F-56100 Lorient (FR)**

(74) Mandataire: **Schmit, Christian Norbert Marie**
**Cabinet Ballot-Schmit**
**4, rue Général Hoche**
**Boîte Postale 855**
**56108 Lorient Cédex (FR)**

(56) Documents cités:
**EP-A- 0 145 533**          **EP-A- 0 531 158**
**EP-A- 0 601 907**

## Description

L'invention concerne un circuit électronique de calcul. Plus particulièrement, elle concerne un circuit dédié au calcul modulaire dans un corps fini GF($2^n$) (corps de Gallois), n étant un entier naturel, permettant de réaliser des opérations de multiplication, mise au carré, exponentiation et inversion modulaires sur des nombres codés en binaire sur n bits.

Classiquement, les opérations modulaires sur GF($2^n$) sont utilisées en cryptographie pour des applications telles que l'authentification de messages, l'identification d'un utilisateur et l'échange de clés. De tels exemples d'applications sont décrits par exemple dans la demande de brevet français publiée sous le numéro 2 679 054.

On trouve dans le commerce des circuits intégrés dédiés à de telles applications, par exemple le produit référencé ST16CF54, fabriqué par SGS-THOMSON MICROELECTRONICS S.A., bâti autour d'une association de type unité centrale - coprocesseur arithmétique, et dédié au calcul modulaire dans un corps quelconque.

L'inventeur a, dans le cadre du calcul sur GF($2^n$) révélé quelques inconvénients dans le fonctionnement de ce circuit particulier. En effet, le coprocesseur de ce circuit à, au cours du traitement d'opérations modulaires sur GF($2^n$), dans le cadre de mise en oeuvre d'une méthode de calcul dite de Montgomery, besoin de connaître le résultat de la résolution d'une équation de type :

$$J * N + 1 = 0 \bmod(2^n),$$ avec N nombre entier connu codé sur n bits, n étant égal à 32 dans le ST16CF54, et mod signifiant modulo.

Le calcul de J est, en pratique, réalisé de manière logicielle par l'unité centrale, celle-ci exécutant pour se faire un programme d'instructions mémorisé dans une mémoire de programmes, de type mémoire morte.

Cette méthode logicielle présente plusieurs inconvénients :

- occupation d'espace mémoire de cette mémoire par ledit programme,
- temps d'exécution relativement long et variable, de l'ordre de 250 microsecondes,
- dépendance du coprocesseur vis à vis de l'unité centrale pour ce calcul.

La demande Européenne, publiée sous le numéro EP-A-0 601 907 décrit un circuit monolithique permettant le calcul modulaire suivant la méthode de calcul dite de Montgomery.

L'invention a pour but de pallier ces inconvénients en proposant un circuit logique câblé mettant en oeuvre ce calcul en un temps constant plus faible, indépendamment de l'unité centrale, et qui ne nécessite pas de programme particulier mémorisé dans la mémoire de programmes.

Un autre but de l'invention est de proposer un circuit peu encombrant, pouvant fonctionner indépendamment du circuit ST16CF54, et donc facilement utilisable pour toutes les applications de type calcul modulaire dans GF ($2^n$).

L'invention propose ainsi un circuit électronique de calcul tel que défini dans la revendication 1.

D'autres modes de réalisation sont spécifiés dans les revendications dépendantes 2 à 8.

Un dispositif de cryptage incorporant l'invention telle que revendiquée et son utilisation dans le calcul d'inversion modulaire sont également revendiquée.

Avantageusement, on utilisera des registres du type registre à décalage comprenant tous un même nombre n de cellules élémentaires.

L'invention sera mieux comprise, et d'autres particularités et avantages apparaîtront dans la description ci-après de modes de réalisation de l'invention, donnés à titre indicatif et nullement limitatif, lue conjointement aux dessins annexés, dans lesquels :

- la figure 1 représente schématiquement un circuit intégré à architecture unité centrale - coprocesseur,
- les figures 2 et 3 représentent deux modes de réalisation de l'invention, et
- les figures 4 et 5 illustrent deux exemples de circuits permettant, dans le cadre de l'invention, d'effectuer une complémentation à 2 sur les résultats des opérations que peut réaliser le circuit de l'invention.

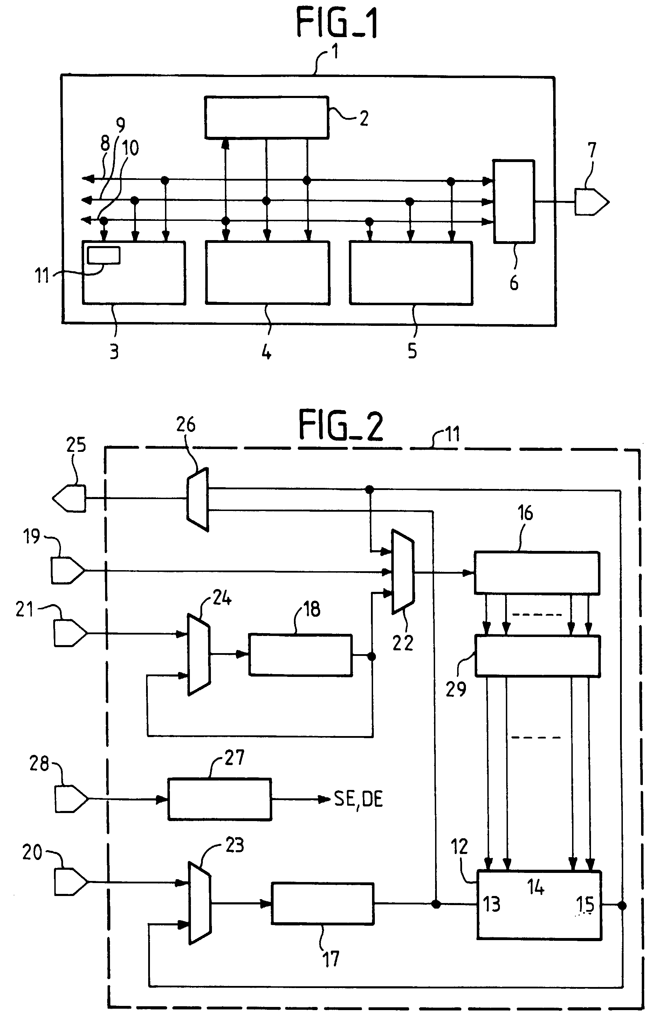

La figure 1 représente schématiquement un dispositif 1, par exemple du type circuit intégré réalisé sur une puce de silicium unique, typiquement dédié au traitement de données numériques cryptées.

Ce dispositif 1 comprend une unité centrale 2, ou microprocesseur, et un ensemble de dispositifs 3, 4, 5, 6, nécessaires à son fonctionnement. Dans un exemple, il comprend un coprocesseur arithmétique 3, une mémoire de programme 4, par exemple de type à lecture seule ou ROM, une mémoire de données 5, et une unité d'interface 6 pour échanger des données avec son environnement par le biais d'entrées/sorties représentées collectivement par le biais d'une borne d'accès 7. Ces différents dispositifs sont reliés à l'unité centrale par un bus de commande 8, un bus d'adresses 9 et un bus de données 10.

Ce type d'architecture est par exemple mis en oeuvre dans le ST16CF54. Le coprocesseur 3 du circuit 1 comprend un circuit 11, réalisé suivant l'invention.

La figure 2 représente un mode de réalisation de l'invention.

Cette figure 2 représente un circuit de calcul 11 comprenant :

- un opérateur de multiplication 12 de type série/parallèle avec une entrée série 13, une entrée parallèle 14, et une sortie série 15,
- un premier, un deuxième et un troisième registres 16, 17 et 18,
- un circuit de multiplexage comprenant les autres éléments du circuit tels que définis ci-après, non représenté unitairement sur la figure 2 pour des raisons évidentes de lisibilité.

Les trois registres 16, 17 et 18 sont du type registre à décalage et dans l'exemple décrit, on considérera qu'ils comportent tous un même nombre n de cellules élémentaires, avec n entier.

Le circuit 11 est agencé de manière à permettre d'effectuer des opérations de multiplication modulaire, mise au carré modulaire, exponentiation modulaire et inversion modulaire sur des éléments d'un corps fini de Gallois à $2^n$ éléments codés en binaire sur n bits, le corps étant noté $GF(2^n)$.

Pour ce faire, on associe un multiplexeur (élément du circuit de multiplexage) à chacun des registres pour pouvoir relier des entrées de ces registres à différentes sources.

Le premier registre 16 a une entrée pour recevoir une donnée binaire codée sur n bits, donc élément de $GF(2^n)$, et une sortie. L'entrée du premier registre est une entrée série et sa sortie est une sortie parallèle. Ainsi, pour rentrer la donnée dans le registre, on procédera par décalage. Par contre, la donnée sera accessible sur n fils chacun étant connectée à une cellule du registre.

Le deuxième et le troisième registres 17 et 18 sont à entrée et sortie série.

L'entrée du registre 16 est connectée à la sortie d'un premier multiplexeur 22 à trois entrées ayant une première entrée reliée à la sortie de l'opérateur de multiplication, une deuxième entrée reliée à une première borne d'entrée de données 19, et une troisième entrée reliée à la sortie du troisième registre 18.

L'entrée du registre 17 est connectée à la sortie d'un deuxième multiplexeur 23 à deux entrées ayant une première entrée reliée à la sortie de l'opérateur de multiplication, et une deuxième entrée reliée à une deuxième borne d'entrée de données 20.

L'entrée du registre 18 est connectée à la sortie d'un troisième multiplexeur 24 à deux entrées ayant une première entrée reliée à une troisième borne d'entrée de données 21, et une deuxième entrée reliée à la sortie de ce troisième registre.

Les bornes d'entrées de données 19, 20 et 21, permettent de recevoir des nombres, codés en binaire sur n bits, sur lesquels on souhaite effectuer des opérations de multiplication, de mise au carré, d'exponentiation, ou d'inversion. Ces bornes pourront être connectées par exemple à des fils du bus de données, à des sorties de registres ou à des entrées/sorties du circuit 1.

Le circuit 11 comprend également une borne de sortie 25 pour fournir, quand on effectue une opération sur un ou plusieurs nombres, le résultat de l'opération. Ce résultat pourra être par exemple disponible pour les autres dispositifs du circuit 1 en connectant cette borne à un fil du bus de données. Cette borne de sortie est reliée à la sortie d'un quatrième multiplexeur 26 à deux entrées ayant une de ses entrées connectée à la sortie de l'opérateur de multiplication 12, et son autre entrée connectée à la sortie du deuxième registre 17.

Enfin, le circuit 11 comprend une borne d'entrée de commandes 28 pour fournir des signaux de commande de sélection SE aux multiplexeurs du circuit de calcul et des signaux de commande de décalage DE aux registres (typiquement par le biais d'un séquenceur 27 recevant des signaux de commande du microprocesseur 2 par la borne d'entrée de commandes 28).

Bien que sur la figure 1 on ait représenté le circuit de calcul 11 comme faisant partie du coprocesseur 3, on comprendra qu'on aurait aussi bien pu le représenter de manière indépendante.

On va ci-après décrire l'utilisation du circuit pour les opérations énumérées ci-dessus. Comme on s'intéresse à des opérations modulaires, seules les n bits de poids les plus faibles du résultat sont à prendre en compte.

Enfin, le circuit de calcul 11 comprend un circuit de mémorisation 29 interposé entre la sortie du premier registre 16 et l'entrée parallèle de l'opérateur de multiplication 12. Ce circuit de mémorisation 29, classiquement une bascule à verrouillage, à n entrées et n sorties, permet de maintenir sur l'entrée parallèle de l'opérateur 12 des états logiques stables en cours de multiplication.

Multiplication modulaire.

Soit à effectuer l'opération $C = A * B \bmod(2^n)$, avec A et B des nombres codés en binaire sur n bits, et mod signifiant modulo.

C sera donc codé en binaire sur n bits.

Pour calculer C il suffit de procéder aux opérations suivants :

1) sélection des entrées des multiplexeurs 22 et 23 de manière à relier les entrées des registres 16 et 17 aux bornes d'entrée de donnée 19 et 20,

2) chargement par décalage des nombres A et B respectivement dans le premier et le deuxième registres 16 et 17,

3) sélection éventuelle d'entrées différentes pour le deuxième et le quatrième multiplexeurs (par exemple, en reliant l'entrée du deuxième registre à la sortie de l'opérateur pour stocker le résultat dans le deuxième registres, et/ou en reliant la borne de sortie de données à la sortie de cet opérateur pour fournir le résultat à l'extérieur du circuit 11),

- décalage de B dans le deuxième registre de manière à fournir successivement les n bits sur lesquels sont codés B à l'opérateur de multiplication, les n bits codant C sortant progressivement de cet opérateur.

Typiquement, ces différentes opérations sont synchronisées par un signal d'horloge périodique, et les opérations de changement simultané des entrées de multiplexeurs ou de décalage d'une cellule à l'autre dans un registre à décalage ont lieu pendant la durée d'une période, ou cycle, de ce signal d'horloge.

Ainsi les étapes ci-dessus nécessitent temporellement :

- 1 temps de cycle pour ce qui concerne l'étape 1),
- n temps de cycle pour ce qui concerne l'étape 2),
- 1 temps de cycle pour ce qui concerne l'étape 3),
- n temps de cycle pour ce qui concerne l'étape 4), (calcul proprement dit).

## Mise au carré modulaire.

Pour la mise au carré, il suffit de procéder de manière identique à celle décrite ci-dessus, en chargeant les registres 16 et 17 avec des nombres identiques.

## Exponentiation modulaire.

Soit à calculer $Y = X^E \bmod(2^n)$, avec X nombre codé en binaire sur n bits, E un nombre codé en binaire sur un nombre 1 entier quelconque de bits $e_0$ à $e_{l-1}$, avec $e_0$ le bit de poids le plus faible, $e_{l-1}$ le bit de poids le plus fort et tel que $e_{l-1} = 1$, et k le nombre de bits $e_i$, i compris entre 0 et 1-1, tel que $e_i = 1$ (k étant bien entendu inférieur ou égal à 1).

Pour calculer Y, il suffit de mettre en oeuvre l'algorithme suivant :

Y : = 1
Pour i de 1-1 à 0
Si

$$e_i = 0 \text{ alors}$$

$$Y := Y * Y,$$

Sinon

$$Y := Y * Y,$$

$$Y := X * Y,$$

i : = i - 1.
Ainsi on voit que :

- si $e_i = 0$, l'algorithme met en oeuvre une mise au carré,
- si $e_i = 1$, l'algorithme met en oeuvre une mise au carré suivie d'une multiplication.

Pour réaliser le calcul de Y, il suffit de procéder de la manière suivante :

1) sélection des entrées des multiplexeurs 22, 23 et 24 de manière à relier les entrées des registres 16, 17 et 18 aux bornes d'entrées de données 19, 20 et 21,
2) chargement par décalage de X dans les premier, deuxième, et troisième registres 16, 17 et 18,

Pour i de 1 - 2 à 0 :

- si $e_i = 0$ alors :

3) sélection des multiplexeurs 22 et 23 de manière à relier les entrées des premier et deuxième registres à la sortie de l'opérateur de multiplication,
4) décalage du contenu du deuxième registre dans celui-ci de manière à fournir successivement les n bits sur lesquels sont codés son contenu à l'opérateur de multiplication, les n bits sortant progressivement de cet opérateur, et représentatifs du résultat d'une mise au carré, étant simultanément chargés dans les premier et deuxième registres (au moins tant que i > 0).

- si $e_i = 1$ alors :

3) sélection des multiplexeurs 22 et 23 de manière à relier d'une part les entrées du premier et du troisième registre à la sortie du troisième registre, et d'autre part l'entrée du deuxième registre à la sortie de l'opérateur de multiplication,
4) décalage du contenu du deuxième registre dans celui-ci de manière à fournir successivement les n bits sur lesquels sont codés son contenu à l'opérateur de multiplication, les n bits sortant progressivement de cet opérateur, et représentatifs du résultat d'une mise au carré, étant simultanément chargés dans le deuxième registre (au moins tant que i > 0), et parallèlement décalage du contenu du troisième registre dans ce registre (par rebouclage de la sortie sur l'entrée) et dans le premier registre.
5) sélection des multiplexeurs 22 et 23 de manière à relier les entrées des premier et deuxième registres à la sortie de l'opérateur de multiplication,
6) décalage du contenu du deuxième registre dans celui-ci de manière à fournir successivement les n bits sur lesquels sont codés son contenu à l'opérateur de multiplication, les n bits sortant progressivement de cet opérateur, et représentatifs du résultat d'une mise au carré, étant simultanément chargés dans les premier et deuxième registres 16 et 17 (au moins tant que i > 0).

Les étapes 1) et 2) nécessitent n + 1 temps de cycles pour être effectuées.
Les étapes 3) et 4) d'une part, et 5) et 6) d'autre part nécessitent également n + 1 temps de cycle pour être effectuées.

Globalement, la durée du traitement sera de m temps de cycle avec

$$m = (n + 1) + [(l - 1) + (k - 1)] * (n + 1),$$

soit

$$m = (l + k - 1) * (n + 1).$$

Si i = 0, la dernière étape fera apparaître en sortie de l'opérateur de multiplication le résultat voulu.

L'utilité du circuit de mémorisation 29 apparaît clairement dans le cadre de l'exponentiation. En effet, lors de la mise en oeuvre du procédé décrit ci-dessus, on charge en série dans le premier registre des bits lors de l'exécution des opérations de multiplication et de mise au carré, et on doit donc disposer d'un moyen pour maintenir les états présents à l'entrée parallèle de l'opérateur dans un état stable lors de l'exécution de ces opérations.

Inversion modulaire.

L'inversion se ramène à une exponentiation traitée de manière identique à celle décrite ci-dessus.

En effet, si on considère le théorème d'Euler, si le plus grand diviseur commun de N et M (noté pgcd(N, M)), avec N et M entiers, est égal à 1 (N et M premiers entre eux), alors $N^{\Phi(M)} = 1 \bmod(M)$, avec $\Phi$ la fonction d'Euler.

Or, si $M = 2n$, alors $\Phi(M) = 2^{n-1}$.

Dans le cas de $GF(2^n)$, qui nous intéresse, en considérant donc que N est codé sur n bits :

- soit N est pair et $pgcd(N,M) = 2^r$, avec r entier inférieur ou égal à n,
- soit N est impair et $pgcd(N,M) = 1$ et d'après le théorème d'Euler, $N^D = 1 \bmod(2^n)$ avec $D = 2^{n-1}$.

   Ainsi, si N impair, on a $N^{-1} = N^E \bmod(2^n)$,
   avec $E = D - 1 = 2^{n-1} - 1$.

L'inversion modulaire se ramène donc à une exponentiation avec un exposant E tel que l = k = n -1, avec l et k définis de manière identique à celle décrite ci-dessus. Le temps de calcul de l'inverse d'un nombre impair se fera donc en un temps constant de m temps de cycle avec

   $m = (2 * n - 3) * (n + 1)$ si on tient compte des étapes 1 et 2 de l'exponentiation telles que définies ci-dessus,
   $m = 2 * (n - 2) * (n + 1)$ si on ne tient compte que des autres étapes (calcul proprement dit).

Complémentation à deux.

A l'heure actuelle, le circuit ST16CF54, de SGS-THOMSON MICROELECTRONICS S.A. résout, par méthode logicielle, l'équation $J_0 * N_0 + 1 = 0 \bmod(2^n)$, avec n = 32, et N connu et codé sur n bits. Cette résolution, comme on l'a indiqué dans le préambule, est mise en oeuvre par l'unité centrale de ce circuit, en un temps moyen de 250 microsecondes, temps pendant lequel son coprocesseur mathématique est arrêté. Le programme utilisé pour résoudre cette équation occupe par ailleurs 124 octets de mémoire morte.

On remarque que la résolution de cette équation équivaut à résoudre l'équation $J_0 = -N_0^{-1} \bmod(2^{32})$.

Le circuit 11 tel que décrit ci-dessus permet de calculer $N_0^{-1} \bmod(2^{32})$. Ce calcul, en considérant un signal d'horloge de fréquence 40 MégaHertz (cas du ST16CF54), nécessite, hors étape 1 et 2, un temps de calcul de 49.5 microsecondes, et un temps de traitement total (étapes 1 et 2 comprises) de 50.3 microsecondes. On diminue ainsi d'un facteur 5 la durée de résolution de l'équation par rapport au ST16CF54.

Compte-tenu de la structure du circuit 11, de type logique câblée, on peut facilement intégrer ce circuit dans un circuit intégré tel que celui désigné. On pourra de même facilement intégrer ce circuit dans un coprocesseur mathématique existant sans modification radicale, compte-tenu de la simplicité du circuit décrit. D'autre part, la solution de l'invention permet un gain de mémoire morte puisque la résolution de l'équation ne mobilise plus les ressources de l'unité centrale.

On notera que si l'invention fait référence à un produit particulier, elle n'en est pas moins utilisable dans tout autre circuit ayant pour application des opérations définies ci-dessus dans un corps de Gallois.

Dans le cadre du ST16CF54, on veut résoudre l'équation $J_0 = -N_0^{-1} (\bmod(2^{32})$. Le circuit 11, tel que décrit ci-dessus, permet de calculer $-J_0$. On pourra de manière très simple fournir $J_0$ sur la borne de sortie de ce circuit. En effet, il s'agit alors de mettre en oeuvre une simple complémentation à deux. Pour cela, il suffit d'inverser la valeur de chacun des n bits du résultat, et d'ajouter 1 (valeur décimale) au nombre ainsi obtenu.

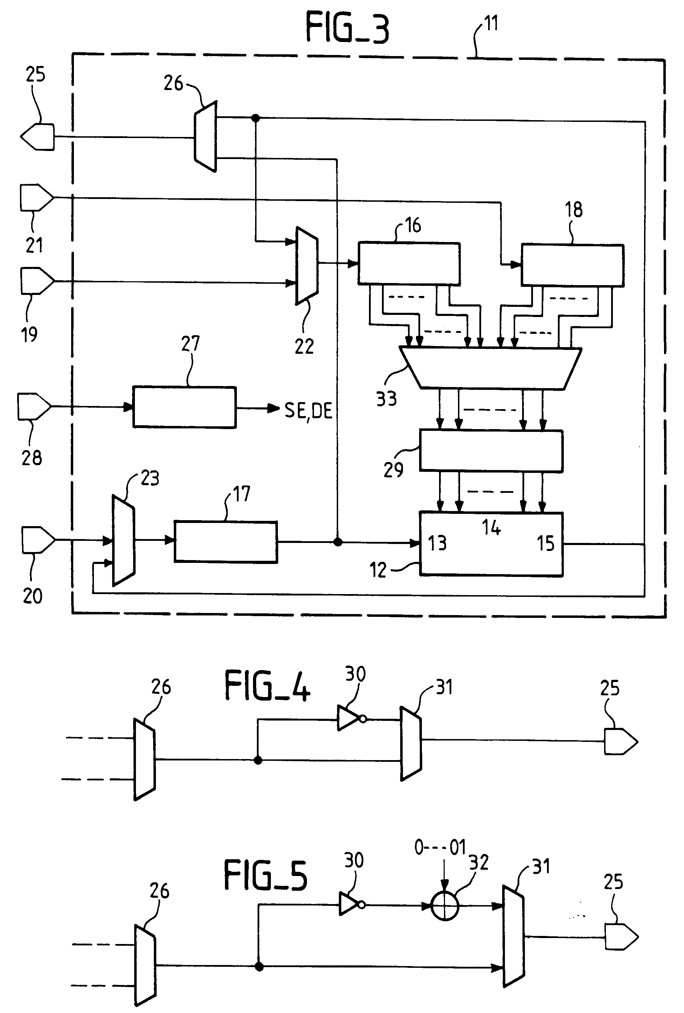

Les figures 4 et 5 illustrent deux modes de réalisation d'une telle complémentation.

Suivant la figure 4, il suffit de disposer d'un multiplexeur 31 supplémentaire à deux entrées, ayant ses deux entrées reliées à la sortie du multiplexeur 26, l'une d'entre elles l'étant par un inverseur 30, et dont la sortie est reliée à la borne 25. Il suffit alors lors de la sortie du bit de poids le plus faible de sélectionner l'entrée sans inverseur, puis celle avec inverseur lors de la sortie des n - 1 bits suivants.

Suivant la figure 5, on disposera entre l'inverseur 30 et le multiplexeur 31, d'un opérateur d'addition permettant d'additionner le nombre 1 (codé sur n bits par un bit de poids le plus faible à 1 et les n - 1 autres bits à 0).

On pourra bien sûr rajouter un registre à décalage supplémentaire de manière à pouvoir stocker la valeur du résultat.

La figure 3 illustre un autre mode de réalisation de l'invention.

Dans ce mode de réalisation, on relie directement la borne d'entrée de données 21 (en reprenant la même numérotation que pour la figure 2), à l'entrée du troisième registre. Ainsi, on élimine le multiplexeur 24. D'autre part le troisième registre est du même type que le premier, c'est-à-dire à sortie parallèle, et on dispose d'un multiplexeur supplémentaire 33 à deux entrées parallèles et une sortie parallèle, de manière à relier sélectivement l'entrée de la bascule de mémorisation 29 soit à la sortie du premier registre, soit à la sortie du deuxième registre.

On remarquera que le troisième registre est utilisé dans la description ci-dessus uniquement pour stocker la valeur d'un nombre sur lequel on pratique une exponentiation. On voit bien qu'il serait également possible d'effectuer une multiplication de trois nombres, en stockant le troisième nombre dans ce troisième registre.

Par ailleurs, si on ne souhaite pas utiliser cette possibilité, on pourra se contenter de deux bornes d'entrée de données seulement, l'un pour le premier et le deuxième registres, et l'autre pour le deuxième registre. En effet, dans le cadre des opérations d'exponentiation et d'inversion telles que définies ci-dessus, on charge initialement le premier et le troisième registres avec des données identiques.

Bien qu'on ait décrit l'invention en référence à deux modes de réalisation donnés, on comprendra que ces exemples ne sont pas limitatifs et que diverses variantes peuvent être apportées sans sortir du cadre de l'invention.

On pourrait par exemple :

- charger les registres en parallèle, ce qui bien sûr se ferait au détriment de l'encombrement du circuit (n bornes d'entrée par registre) mais permettrait de diminuer le temps de chargement des registres d'un facteur n, les registres conservant par ailleurs leur sortie série utilisée dans les phases de calcul.
- relier en série les trois registres au moment du chargement, si on souhaite diminuer le nombre de bornes d'accès au circuit. Par exemple, on pourra éliminer la première et la troisième borne d'entrée de données, et relier l'entrée du troisième multiplexeur 24 correspondante à la troisième borne d'entrée à la sortie du deuxième registre et supprimer l'entrée du premier multiplexeur 22 correspondante à la première borne d'entrée. On pourrait également envisager d'utiliser un deuxième multiplexeur à trois entrées de manière à permettre de relier la sortie du deuxième registre à son entrée, et permettre ainsi de ne charger qu'une seule fois depuis l'extérieur une donnée quand on souhaite effectuer sur celle-ci une mise au carré ou une exponentiation.

## Revendications

1. Circuit électronique de calcul modulaire (11) dans un corps fini de type $GF(2^n)$, n entier, caractérisé en ce qu'il comporte:

   - un opérateur de multiplication (12) avec une entrée série, un entrée parallèle, et une sortie série,
   - un premier registre (16) ayant une entrée série et une sortie parallèle, relié par sa sortie à l'entrée parallèle de l'opérateur de multiplication,
   - un deuxième registre (17) ayant une entrée série et une sortie série, relié par sa sortie à l'entrée série de l'opérateur de multiplication,
   - un troisième registre (18) ayant une entrée série et une sortie série,
   - un premier multiplexeur (22) reliant sélectivement une première borne de données (19), la sortie série de l'opérateur de multiplication (12) et la sortie du troisième registre (18) à l'entrée du premier registre (16),
   - un second multiplexeur (23) reliant sélectivement une deuxième borne de données (20) et la sortie série de l'opérateur de multiplication (12) à l'entrée du deuxième registre (17),
   - un troisième multiplexeur (24) reliant sélectivement une troisième borne de données (21) et la sortie du troisième registre (18) à l'entrée du troisième registre (18), et
   - une borne de sortie de données (25) relié à la sortie de l'opérateur de multiplication (12) pour produire un signal de sortie du circuit électronique de calcul, et
   - un circuit de mémorisation (29) interposé entre la sortie parallèle du premier registre (16) et l'entrée parallèle de l'opérateur de multiplication (12).

2. Circuit électronique de calcul modulaire (11) dans un corps fini de type $GF(2^n)$, n entier, caractérisé en ce qu'il comporte:

   - un opérateur de multiplication (12) avec une entrée série, un entrée parallèle, et une sortie série,
   - un premier registre (16) ayant une entrée série et une sortie parallèle,
   - un deuxième registre (17) ayant une entrée série et une sortie série, relié par sa sortie à l'entrée série de l'opérateur de multiplication (12),
   - un premier multiplexeur (22) reliant sélectivement une première borne de données (19) et la sortie série de l'opérateur de multiplication (12) à l'entrée du premier registre (16),
   - un second multiplexeur (23) reliant sélectivement une deuxième borne de données (20) et la sortie série de l'opérateur de multiplication (12) à l'entrée du deuxième registre (17),

- un troisième registre (18) ayant une entrée série et une sortie parallèle, relié par son entrée à une troisième borne d'entrée de données (21),

- un troisième multiplexeur (33) reliant sélectivement la sortie parallèle du premier registre (16) et la sortie parallèle du troisième registre (18) à l'entrée parallèle de l'opérateur de multiplication (12), et

- une borne de sortie de données (25) relié à la sortie de l'opérateur de multiplication (12) pour produire un signal de sortie du circuit électronique de calcul, et

- un circuit de mémorisation (29) interposé entre la sortie du troisième multiplexeur (33) et l'entrée parallèle de l'opérateur de multiplication (12).

3. Circuit selon l'une des revendications 1 ou 2, caractérisé en ce qu'il comporte en outre un quatrième multiplexeur (26) reliant sélectivement la sortie série de l'opérateur de multiplication (12) et la sortie du deuxième registre (17) à la borne de sortie (25) du circuit.

4. Circuit selon l'une des revendications 1 à 3, caractérisé en ce que les registres sont du type registre à décalage.

5. Circuit selon l'une des revendications 1 à 4, caractérisé en ce que les registres comportent tous un même nombre n de cellules.

6. Circuit selon l'une des revendications 1 à 5, caractérisé en ce qu'il comporte un circuit de complément à deux.

7. Dispositif de cryptage comportant un microprocesseur, une mémoire programme, un coprocesseur arithmétique, et une entrée/sortie de données, caractérisé en ce qu'il comporte ledit circuit électronique de calcul selon l'une des revendications 1 à 6, le microprocesseur produisant des signaux de commande des multiplexeurs.

8. Utilisation du circuit électronique selon l'une des revendications 1 à 6, caractérisé en ce qu'il met en oeuvre une fonction d'inversion modulaire dans un corps fini du type $GF(2^n)$, n entier.

## Claims

1. Electronic circuit (11) for modular calculation in a finite field of the $GF(2^n)$, n integer, type, characterised in that it includes:

- a multiplication operator (12) with a serial input, a parallel input and a serial output,

- a first register (16) having a serial input and a parallel output, connected by its output to the parallel input of the multiplication operator,

- a second register (17) having a serial input and a serial output, connected by its output to the serial input of the multiplication operator,

- a third register (18) having a serial input and a serial output,

- a first multiplexer (22) selectively connecting a first data terminal (19), the serial output of the multiplication operator (12) and the output of the third register (18) to the input of the first register (16),

- a second multiplexer (23) selectively connecting a second data terminal (20) and the serial output of the multiplication operator (12) to the input of the second register (17),

- a third multiplexer (24) selectively connecting a third data terminal (21) and the output of the third register (18) to the input of the third register (18), and

- a data output terminal (25) connected to the output of the multiplication operator (12) in order to produce an output signal from the electronic calculation circuit, and

- a storage circuit (29) interposed between the parallel output of the first register (16) and the parallel input of the multiplication operator (12).

2. Electronic circuit (11) for modular calculation in a finite body of the $GF(2^n)$, n integer, type, characterised in that it includes:

- a multiplication operator (12) with a serial input, a parallel input and a serial output,

- a first register (16) having a serial input and a parallel output,

- a second register (17) having a serial input and a serial output connected by its output to the serial input of the multiplication operator (12),

- a first multiplexer (22) selectively connecting a first data terminal (19) and the serial output of the multiplication operator (12) to the input of the first register (16),

- a second multiplexer (23) selectively connecting a second data terminal (20) and the serial output of the multiplication operator (12) to the input of the second register (17),

- a third register (18) having a serial input and a parallel output, connected by its input to a third data input terminal (21),

- a third multiplexer (33) selectively connecting the parallel output of the first register (16) and the parallel output of the third register (18) to the parallel input of the multiplication operator (12), and

- a data output terminal (25) connected to the output of the multiplication operator (12) in order to produce an output signal from the electronic calculation circuit, and

- a storage circuit (29) interposed between the output of the third multiplexer (33) and the parallel input of the multiplication operator (12).

3. Circuit according to one of Claims 1 or 2, characterised in that it also has a fourth multiplexer (26) selectively connecting the serial output of the multiplication operator (12) and the output of the second register (17) to the output terminal (25) of the circuit.

4. Circuit according to one of Claims 1 to 3, characterised in that the registers are of the shift register type.

5. Circuit according to one of Claims 1 to 4, characterised in that the registers all have the same number n of cells.

6. Circuit according to one of Claims 1 to 5, characterised in that it includes a two's complement circuit.

7. Encryption device including a microprocessor, a program memory, an arithmetic coprocessor and a data input/output, characterised in that it includes the said electronic calculation circuit according to one of Claims 1 to 6, the microprocessor producing signals controlling the multiplexers.

8. Use of the electronic circuit according to one of Claims 1 to 6, characterised in that it uses a modular inversion function in a finite body of the GF($2^n$), n integer, type.

**Patentansprüche**

1. Elektronische Schaltung (11) zur Modulo-Rechnung in einem endlichen Körper von Typ GF($2^n$), wobei n eine ganze Zahl ist, dadurch gekennzeichnet, daß sie umfaßt:

- einen Multiplikationsoperator (12) mit einem seriellen Eingang, einem parallelen Eingang und einem seriellen Ausgang,

- ein erstes Register (16) mit einem seriellen Eingang und einem parallelen Ausgang, das durch seinen Ausgang mit dem parallelen Eingang des Multiplikationsoperators verbunden ist,

- ein zweites Register (17) mit einem seriellen Eingang und einem seriellen Ausgang, das durch seinen Ausgang mit dem seriellen Eingang des Multiplikationsoperators verbunden ist,

- ein drittes Register (18) mit einem seriellen Eingang und einem seriellen Ausgang,

- einen ersten Multiplexer (22), der selektiv einen ersten Datenanschluß (19), den seriellen Ausgang des Multiplikationsoperators (12) und den Ausgang des dritten Registers (18) mit dem Eingang des ersten Registers (16) verbindet,

- einen zweiten Multiplexer (23), der selektiv einen zweiten Datenanschluß (20) und den seriellen Ausgang des Multiplikationsoperators (12) mit dem Eingang des zweiten Registers (17) verbindet,

- einen dritten Multiplexer (24), der selektiv einen dritten Datenanschluß (21) und den Ausgang des dritten Registers (18) mit dem Eingang des dritten Registers (18) verbindet, und

- einen Datenausgangsanschluß (25), der mit dem Ausgang des Multiplikationsoperators (12) verbunden ist, um ein Ausgangssignal der elektronischen Rechenschaltung zu erzeugen, und

- eine Speicherschaltung (29), die zwischen dem parallelen Ausgang des ersten Registers (16) und dem parallelen Eingang des Multiplikationsoperators (12) angeordnet ist.

2. Elektronische Schaltung (11) zur Modulo-Rechnung in einem endlichen Körper vom Typ GF($2^n$), wobei n eine ganze Zahl ist, dadurch gekennzeichnet, daß sie umfaßt:

- einen Multiplikationsoperator (12) mit einem seriellen Eingang, einem parallelen Eingang und einem seriellen Ausgang,

- ein erstes Register (16) mit einem seriellen Eingang und einem parallelen Ausgang,

- ein zweites Register (17) mit einem seriellen Eingang und einem seriellen Ausgang,-das durch seinen Ausgang mit dem seriellen Eingang des Multiplikationsoperators (12) verbunden ist,

- einen ersten Multiplexer (22), der selektiv einen ersten Datenanschluß (19) und den seriellen Ausgang des Multiplikationsoperators (12) mit dem Eingang des ersten Registers (16) verbindet,

- einen zweiten Multiplexer (23), der selektiv einen zweiten Datenanschluß (20) und den seriellen Ausgang des Multiplikationsoperators (12) mit dem Eingang des zweiten Registers (17) verbindet,

- ein drittes Register (18) mit einem seriellen Eingang an einem parallelen Ausgang, das durch seinen Eingang mit einem dritten Dateneingangsanschluß (21) verbunden ist,

- einen dritten Multiplexer (33), der selektiv den parallelen Ausgang des ersten Registers (16) und den parallelen Eingang des dritten Registers (18) mit dem parallelen Eingang des Multiplikationsoperators (12) verbindet, und

- einen Datenausgangsanschluß (25), der mit dem Ausgang des Multiplikationsoperators (12) verbunden ist, um ein Ausgangssignal der elektronischen Rechenschaltung zu erzeugen, und

- eine Speicherschaltung (29), die zwischen dem Ausgang des dritten Multiplexers (33) und dem parallelen Eingang des Multiplikationsoperators (12) angeordnet ist.

3. Schaltung nach einem der Ansprüche 1 oder 2, dadurch gekennzeichnet, daß sie ferner einen vierten Multiplexer (26) aufweist, der selektiv den seriellen Ausgang des Multiplikationsoperators (12) und den Ausgang des zweiten Registers (17) mit dem Ausgangsanschluß (25) der Schaltung verbindet.

4. Schaltung nach einem der Ansprüche 1 bis 3, dadurch gekennzeichnet, daß die Register Schieberegister sind.

5. Schaltung nach einem der Ansprüche 1 bis 4, dadurch gekennzeichnet, daß die Register alle dieselbe Zahl n von Zellen aufweisen.

6. Schaltung nach einem der Ansprüche 1 bis 5, dadurch gekennzeichnet, daß sie eine Zweierkomplementschaltung umfaßt.

7. Chiffriervorrichtung mit einem Mikroprozessor, einem Programmspeicher, einem Arithmetikkoprozessor und einem Datenein/Ausgang, dadurch gekennzeichnet, daß sie die elektronische Rechenschaltung nach einem der Ansprüche 1 bis 6 umfaßt und der Mikroprozessor die Signale zum Steuern der Multiplexer erzeugt.

8. Verwendung der elektronischen Schaltung nach einem der Ansprüche 1 bis 6, dadurch gekennzeichnet, daß sie eine Modulo-Kehrwertbildungsfunktion in einem endlichen Körper vom Typ $GF(2^n)$ ausführt, wobei n eine ganze Zahl ist.

## FIG_1

## FIG_2

SE,DE

## FIG_3

## FIG_4

## FIG_5